Europäisches Patentamt

European Patent Office

Office européen des brevets

(19)

(11) Numéro de publication: **0 094 300**
**B1**

(12) **FASCICULE DE BREVET EUROPEEN**

(45) Date de publication du fascicule du brevet: **20.11.86**

(51) Int. Cl.⁴: **F 16 B 7/04**

(21) Numéro de dépôt: **83400885.6**

(22) Date de dépôt: **03.05.83**

(54) **Embout d'assemblage à angle variable, notamment pour profilés métalliques.**

(30) Priorité: **11.05.82 FR 8208151**

(43) Date de publication de la demande:
**16.11.83 Bulletin 83/46**

(45) Mention de la délivrance du brevet:
**20.11.86 Bulletin 86/47**

(84) Etats contractants désignés:
**BE CH DE GB IT LI LU NL**

(58) Documents cités:
**FR-A-2 094 231**
**GB-A-2 052 003**

(73) Titulaire: **TECHNAL-FRANCE**
**270 rue Léon Joulin**
**F-31027 Toulouse Cedex (FR)**

(72) Inventeur: **Mendez, Serge**
**33 Lotissement des Ecoles Roquette**
**F-31120 Portet sur Garonnet (FR)**
Inventeur: **Cavalie, Jean-François**
**Chemin des Clottes**
**F-81600 Gaillac (FR)**

(74) Mandataire: **Martin, Jean-Jacques et al**
**Cabinet REGIMBEAU 26, Avenue Kléber**
**F-75116 Paris (FR)**

**EP 0 094 300 B1**

Courier Press, Leamington Spa, England.

**Description**

La présente invention concerne un embout d'assemblage de profilés, notamment de profilés métalliques.

Cet embout permet l'assemblage d'un premier profilé, creux, en appui de bout contre une face d'un second profilé. Par la suite, le premier profilé sera appelé "traverse", et le second, "montant"; ces termes ne doivent cependant suggérer aucune limitation du domaine d'application, ni aucune orientation particulière de l'assemblage.

Le profilé creux constituant la traverse peut être du type dit "tubulaire" (à section fermée) ou du type dit "quasi-tubulaire" (à section ouverte). Le profilé constituant le montant n'est pas nécessairement creux.

Divers dispositifs connus permettent, lorsqu'il s'agit de réaliser un tel assemblage, le rapprochement du montant et de la traverse, la mise en butée et le serrage du chant de celle-ci contre la face du montant. Un tel dispositif est notamment décrit dans le GB—A—2052003, et il permet de réaliser aisément ces opérations grâce à deux pièces indéformables dont l'une est fixée au montant (par exemple par une queue d'aronde s'engageant dans une rainure homologue du montant) et dont l'autre est fixée à la traverse (par exemple au moyen d'un pion rétractable). L'ensemble est entièrement contenu dans la cavité de la traverse, et une vis, serrée de l'extérieur, assure le rapprochement des deux pièces et par conséquent celui des deux profilés dont elles sont solidaires.

Ce dispositif, qui est de mise en oeuvre rapide et simple, assure une solidarisation robuste des deux profilés, grâce notamment à la rigidité des pièces de jonction et à leur étroite adaptation à la forme intérieure de la cavité de la traverse. En particulier, la pièce fixée au montant doit s'ajuster précisément à la section intérieure du profilé de la traverse (dont la dimension (ou module) est une valeur normalisée) permettant ainsi à celle-ci d'être parfaitement d'équerre avec le montant, même si la coupe de l'extrémité n'est pas parfaite. Le dispositif corrige les défauts de coupe, la précision de l'assemblage n'étant obtenue que par les pièces de jonction; cette précision est d'autant plus élevée que le jeu entre la pièce fixée au montant et les faces de la cavité intérieure est faible.

De ce fait, il est clair qu'un tel dispositif ne permet que des assemblages à angle droit, ou à la rigueur à angle unique, avec une pièce fixée au montant ayant une forme permettant d'imposer un angle donné.

L'embout selon l'invention propose, au contraire, de permettre l'assemblage à angle quelconque de la traverse sur le montant, en conservant les avantages déjà cités de solidité et de rapidité de pose du dispositif de la technique antérieure.

Il comporte, de façon connue en elle-même, un coulisseau muni de moyens d'accrochage à la traverse, une chape reliée au montant et comportant des moyens pour assurer le déplacement relatif longitudinal du coulisseau dans le sens du rapprochement de la traverse vers le montant. Selon l'invention, il comporte également une charnière munie de moyens de fixation au montant, reliée à la chape et articulée sur celle-ci autour d'un axe perpendiculaire au plan de l'assemblage.

Comme précédemment, l'embout permet, par simple vissage, d'approcher, de guider et de bloquer la traverse contre le montant. Mais l'angle d'assemblage est désormais déterminé uniquement par la précision de la coupe en biseau de la traverse (précision qu'il est possible d'obtenir de manière tout à fait satisfaisante avec les techniques classiques de sectionnement des profilés). Il devient ainsi possible de réaliser des assemblages selon un angle quelconque, pouvant varier de manière continue dans de très larges proportions. Ceci permet notamment un rattrapage de pente et d'imprécisions de coupe, rattrapage impossible avec le dispositif de la technique antérieure qui, au contraire, tendait à redresser la traverse pour imposer un angle fixé à l'avance.

La conception de l'embout lui permet en outre de rester totalement dissimulé à l'intérieur de la cavité de la traverse, même pour un angle d'assemblage très aigu, en ne laissant apparaître sur la surface extérieure aucune pièce ou organe proéminent révélant sa présence. Les seuls éléments apparents sur la traverse sont des perçages dont le rôle sera explicité plus bas. L'embout est en outre réversible, ce qui permet de réaliser un assemblage dont les perçages peuvent être situées indifféremment sur la face de la traverse située du côté de l'angle obtus formé par l'ensemble montant-traverse ou sur la face située du côté de l'angle aigu. On peut ainsi choisir de laisser l'une ou l'autre face lisse.

D'autres caractéristiques et avantages de l'invention apparaîtront à la lecture détaillée de la description d'un mode de réalisation, fait en référence aux figures annexées, sur lesquelles:

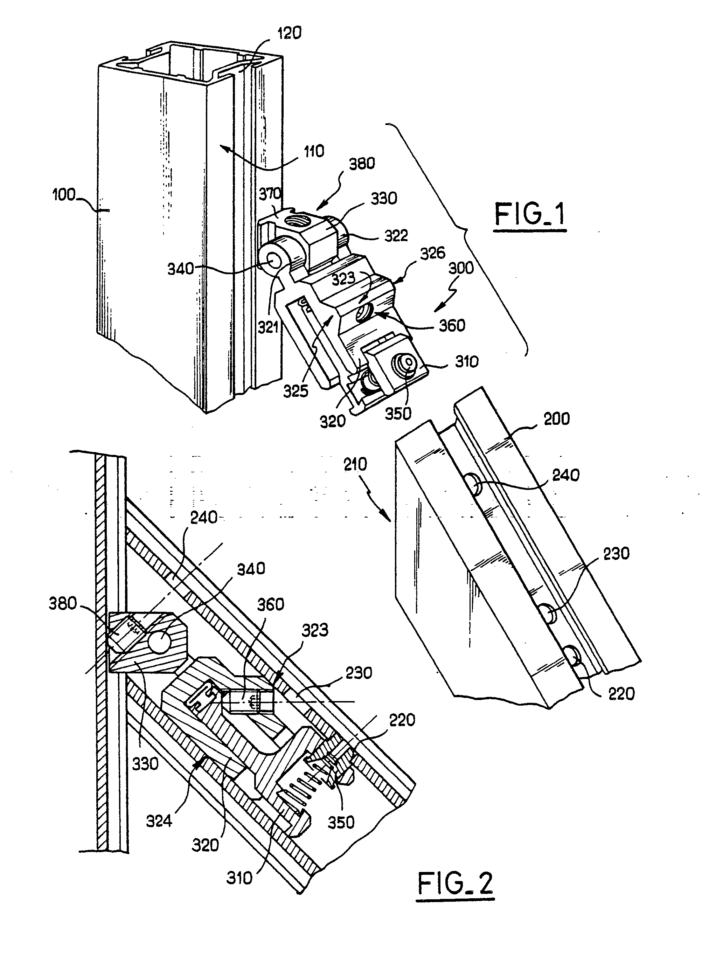

· la figure 1 est une vue perspective de l'ensemble montant-embout-traverse avant assemblage,
· la figure 2 est une coupe verticale du même ensemble une fois l'assemblage réalisé.

Le montant 100 et la traverse 200 sont assemblés ensemble au moyen de l'embout 300, de manière que la face 210 coupée en biseau de la traverse vienne porter contre la face latérale 110 du montant.

L'embout 300 est formé de trois pièces: un coulisseau 310, une chape 320 dans laquelle pénètre le coulisseau, et une charnière 330 articulée sur la chape au moyen d'un axe 340.

De préférence, l'extrémité de la chape située du côté du montant a la forme d'une mortaise à l'intérieur de laquelle est logée la charnière articulée. L'axe 340 traverse alors des trous alignés pratiqués dans les deux ailes 321, 322 de la mortaise et dans la charnière.

Le coulisseau est muni de moyens d'accrochage à la traverse, par exemple et de manière connue, un pion rétractable 350 pouvant être introduit dans un perçage 220 pratiqué sur une des faces de la traverse.

De manière également connue, le rapprochement du coulisseau et de la chape — donc le rapprochement de la traverse contre le montant — est obtenu par une vispression 360, par exemple une vis à tête creuse à six pans qui peut être serrée de l'extérieur par l'introduction d'un outil dans le perçage 230 pratiqué sur la même face que le perçage 220 pour l'encliquetage du pion.

Le coulisseau comporte une extrémité 370 en forme de queue d'aronde coopérant avec une rainure 120, homologue, du montant. Une vispression 380 permet d'éviter le coulissement de la queue d'aronde dans la rainure du montant. Cette vis 380 peut être également serrée de l'extérieur par un outil introduit dans le perçage 240, disposé sur la même face du montant que les deux perçages précédents. Le réglage de la traverse en hauteur reste donc toujours possible, grâce à la charnière qui coulisse dans la rainure du montant.

Avantageusement — mais non nécessairement —, la chape comporte deux surfaces d'appui 323, 324 sur les faces inférieure et supérieure de la cavité de la traverse, ainsi que, éventuellement, deux surfaces d'appui 325, 326 sur les faces latérales de cette même cavité.

Cette disposition permet une mise en place plus aisée de la chape à l'intérieur de la traverse mais conserve la liberté de choix de l'angle de montage.

Enfin, on peut noter que le dispositif décrit est réversible, c'est-à-dire que les trois perçages 220, 230, 240 peuvent être indifféremment pratiqués sur la face supérieure ou inférieure de la traverse, l'embout ayant alors simplement à être retourné. On peut ainsi conserver au choix l'une ou l'autre face lisse.

Bien entendu, la présente description n'est donnée qu'à titre indicatif, et l'invention s'étend à toutes les variantes conformes à son esprit.

## Revendications

1. Embout d'assemblage (300) d'une traverse (200) profilée creuse sur la face (110) d'un montant (100) profilé, susceptible d'être contenu à l'intérieur de la cavité de la traverse, du type comportant:
· un coulisseau (310) muni de moyens d'accrochage (350) à la traverse,
· une chape (320), reliée au montant et comportant des moyens (360) pour assurer le déplacement relatif longitudinal du coulisseau dans le sens du rapprochement de la traverse vers le montant, caractérisé en ce qu'il comporte en outre une charnière (330) munie de moyens de fixation (370, 380) au montant, reliée à la chape et articulée sur celle-ci autour d'un axe (340) perpendiculaire au plan de l'assemblage.

2. Embout selon la revendication 1, caractérisé en ce que l'extrémité de la chape située du côté du montant a la forme d'une mortaise à l'intérieur de laquelle est logée la charnière articulée.

3. Embout selon la revendication 2, caractérisé en ce que la charnière et la chape sont assemblées et articulées par l'axe (340) traversant des trous alignés pratiqués dans la mortaise de la chape et dans la charnière.

4. Embout selon l'une des revendications 1 à 3, caractérisé en ce que la chape comporte deux surfaces d'appui (323, 324) sur les faces inférieure et supérieure de la cavité de la traverse.

5. Embout selon l'une des revendications 1 à 4, caractérisé en ce que la chape comporte deux surfaces d'appui (325, 326) sur les faces latérales de la cavité de la traverse.

## Patentansprüche

1. Vorrichtung zur Verbindung (300) einer hohl profilierten Traverse (200) an der Fläche (110) eines profilierten Ständers (100), welche, im Inneren des Hohlraums der Traverse aufgenommen werden kann, mit:
einem Gleitteil (310), welches Einrichtungen (350) zum Eingriff mit der Traverse aufweist,
einer Kappe (320), welche mit dem Ständer verbunden ist und Einrichtungen (360) zum Sichern der Relativverschiebung des Gleitteils in Richtung der Annäherung der Traverse zu dem Ständer aufweist, dadurch gekennzeichnet, daß sie ferner ein mit Einrichtungen zur Befestigung (370, 380) am Ständer versehenes Scharnier (330) umfaßt, welches mit der Kappe verbunden ist und über dieser um eine zur Verbindungsebene senkrechte Achse (340) schwenkbar gelagert ist.

2. Vorrichtung nach Anspruch 1, dadurch gekennzeichnet, daß das auf der Seite des Ständers angeordnete äußerste Ende der Kappe die Form einer Aussparung hat, in deren Innerem das beweglich gelagerte Scharniergelenk eingesetzt ist.

3. Vorrichtung nach Anspruch 2, dadurch gekennzeichnet, daß das Scharnier und die Kappe durch eine Achse (340) verbunden und beweglich gelagert sind, welche ausgerichtete Löcher durchquert, die in der Aussparung der Kappe und in dem Scharnier angeordnet sind.

4. Vorrichtung nach einem der Ansprüche 1 bis 3, dadurch gekennzeichnet, daß die Kappe an den Unter- und Oberseiten des Hohlraums der Traverse zwei Stützflächen (323, 324) aufweist.

5. Vorrichtung nach einem der Ansprüche 1 bis 4, dadurch gekennzeichnet, daß die Kappe an den Seitenflächen des Hohlraums der Traverse zwei Stützflächen (325, 326) aufweist.

## Claims

1. Connecting piece (300) for connecting a hollow sectional cross member (200) on the face (110) of a sectional upright (100), which connecting piece is adapted to be contained inside the cavity of the cross member and is of the type comprising:
— a slide (310) provided with means (350) for fastening to the cross member,
— a yoke (320) connected to the upright and having means (360) for effecting the relative longitudinal displacement of the slide in the direction bringing the cross member nearer to the upright, characterized in that it is in addition provided with a hinge (330) equipped with means (370, 380) for fastening to the upright and connected to the yoke, on which it is articulated about an axis (340) perpendicular to the plane of the connection.

2. Connecting piece according to Claim 1, characterized in that that end of the yoke which is situated on the upright side is in the form of a mortice inside which the articulated hinge is housed.

3. Connecting piece according to Claim 2, characterized in that the hinge and the yoke are joined and articulated by the pin (340) passing through aligned holes formed in the mortice of the yoke and in the hinge.

4. Connecting piece according to one of Claims 1 to 3, characterized in that the yoke has two support surfaces (323, 324) on the bottom and top faces of the cavity of the cross member.

5. Connecting piece according to one of claims 1 to 4, characterized in that the yoke has two support surfaces (325, 326) on the side faces of the cavity of the cross member.

FIG_1

FIG_2